# EUROPÄISCHE PATENTSCHRIFT

(11) **EP 1 730 239 B1**
(45) Veröffentlichungstag und Bekanntmachung des Hinweises auf die Patenterteilung: **02.05.2007**
(21) Anmeldenummer: 04803448.2
(22) Anmeldetag: 02.12.2004
(51) Int. Cl.: C09B 44/20

(54) **AUFHELLENDES FÄRBEMITTEL MIT INDOLYLTHIAZOLIUMAZOFARBSTOFFEN**
LIGHTENING COLORANT CONTAINING INDOLYL THIAZOLIUM AZO DYES
AGENT DE COLORATION CAPILLAIRE ECLAIRCISSANT CONTENANT DES COLORANTS AZOIQUES D'INDOLYLTHIAZOLIUM

(30) Priorität: 21.02.2004 DE 102004008606
(43) Veröffentlichungstag der Anmeldung: 13.12.2006
(73) Patentinhaber: Wella Aktiengesellschaft, 64274 Darmstadt (DE)
(72) Erfinder: PASQUIER, Cécile, CH-1723 Marly (CH); BUCLIN, Véronique, CH-1638 Morlon (CH); DUC-REICHLIN, Nadia, CH-1470 Lully (CH); KIENER, Caroline, CH-1723 Marly (CH); BRAUN, Hans-Jürgen, CH-3182 Überstorf (CH)
(74) Vertreter: Bockhorst, Matthias
(86) Internationale Anmeldenummer: PCT/EP2004/013706
(87) Internationale Veröffentlichungsnummer: WO 2005/080507

(56) Entgegenhaltungen:
- BE-A1- 770 437
- GB-A- 860 584
- GB-A- 1 348 665
- GB-A- 1 550 306

## Beschreibung

Gegenstand der vorliegenden Erfindung sind Mittel zum gleichzeitigen Färben und Aufhellen von Keratinfasern, wie zum Beispiel Wolle, Seide oder Haaren und insbesondere menschlichen Haaren, welche mindenstens einen Indolylthiazoliumazofarbstoff enthalten.

Für die farbverändernde Behandlung von Keratinfasern werden in der Regel zwei Färbeverfahren angewendet. Im ersten Verfahren wird die Färbung mit sogenannten oxidativen oder permanenten Färbemitteln unter Verwendung einer Mischung aus verschiedenen Entwicklersubstanzen und Kupplersubstanzen und eines Oxidationsmittels erzeugt. Bei Bedarf können bei diesem Verfahren zur Abrundung des Färbeergebnisses oder zur Erzeugung von besonderen Farbeffekten sogenannte direktziehende (nicht-oxidative) Farbstoffe zugesetzt werden. Das zweite Verfahren bedient sich ausschließlich direktziehender Farbstoffe, die in einer geeigneten Trägermasse auf die Fasern aufgebracht werden. Dieses Verfahren ist einfach anzuwenden, ausgesprochen schonend und zeichnet sich durch eine geringe Schädigung der Keratinfaser aus. An die hierbei verwendeten direktziehenden Farbstoffe werden eine Vielzahl von Anforderungen gestellt. So müssen sie in toxikologischer und dermatologischer Hinsicht unbedenklich sein und die Erzielung von Färbungen in der gewünschten Intensität ermöglichen, was unter anderem auch eine ausreichende Wasserlöslichkeit voraussetzt. Außerdem wird für die erzielten Färbungen eine gute Lichtechtheit, Säureechtheit und Reibechtheit gefordert.

Im Vergleich zu oxidativen Färbungen besitzen nicht-oxidative Färbungen in der Regel jedoch eine geringere Haltbarkeit und einen schlechteren Farbausgleich. Zudem sind direktziehende Färbemittel in der Regel nicht in der Lage das Haar "hellerzufärben", da viele Direktzieher die zum Aufhellen benötigten Oxidationsmittel und/oder den erforderlichen pH-Wert von größer/gleich 9 nicht vertragen.

Aufgabe der vorliegenden Erfindung ist es daher, ein Färbemittel auf der Basis von gegenüber basischen pH-Werten und Oxidationsmitteln beständigen direktziehenden Farbstoffen -insbesondere für den orangen bis violetten Farbbereich- zur Verfügung zu stellen.

Es wurde nunmehr gefunden, dass diese Aufgabe durch den Einsatz von bestimmten Indolylthiazoliumazofarbstoffen gelöst werden kann.

Gegenstand der vorliegenden Erfindung ist daher ein Mittel zur gleichzeitigen Aufhellung und Färbung von Keratinfasern -insbesondere Haaren-, welches dadurch gekennzeichnet ist, dass es (a) ein Oxidationsmittel sowie (b) mindestens einen Indolylthiazoliumazofarbstoff der Formel (I) enthält, und (c) einen basischen pH-Wert aufweist, 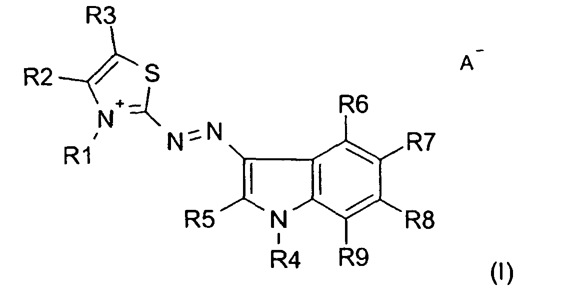 wobei
**R1** eine gesättigte oder ungesättigte (C₁-C₁₂)-Alkylgruppe, eine mit einem Halogenatom (F, Cl, Br, J) substituierte (C₁-C₁₂)-Alkylgruppe, eine Hydroxy-(C₁-C₁₂)-alkylgruppe, eine (C₁-C₆)Alkoxy-(C₁-C₁₂)-alkylgruppe, eine Amino-(C₁-C₁₂)-alkylgruppe, eine (C₁-C₆)-Alkyl amino-(C₁-C₁₂)-alkylgruppe, eine Di-(C₁-C₆)-alkylamino-(C₁-C₁₂)-alkylgruppe, eine Cyano-(C₁-C₁₂)-alkylgruppe, eine substituierte oder unsubstituierte Phenylgruppe oder eine substituierte oder unsubstituierte Benzylgruppe darstellt,
**R2** und **R3** gleich oder verschieden sein können und unabhängig voneinander Wasserstoff, ein Halogenatom (F, Cl, Br, J), eine gesättigte oder ungesättigte (C₁-C₁₂)-Alkylgruppe, eine (C₁-C₁₂)-Alkoxygruppe, eine Nitrogruppe, eine Aminogruppe, eine (C₁-C₁₂)-Alkylaminogruppe, eine Di(C₁-C₁₂)-alkylaminogruppe, eine (C₁-C₁₂)-Hydroxyalkylaminogruppe, eine Di(C₁-C₁₂)-hydroxyalkylaminogruppe, eine substituierte oder unsubstituierte Phenylgruppe oder eine substituierte oder unsubstituierte Heteroarylgruppe darstellen;
**R4** eine gesättigte oder ungesättigte (C₁-C₁₂)-Alkylgruppe, eine mit einem Halogenatom (F, Cl, Br, J) substituierte (C₁-C₁₂)-Alkylgruppe, eine Hydroxy-(C₁-C₁₂)-alkylgruppe, eine (C₁-C₆)Alkoxy-(C₁-C₁₂)-alkylgruppe, eine Amino-(C₁-C₁₂)-alkylgruppe, eine (C₁-C₆)-Alkylamino-(C₁-C₁₂)-alkylgruppe, eine Di-(C₁-C₆)-alkylamino-(C₁-C₁₂)-alkylgruppe, eine Cyano-(C₁-C₁₂)-alkylgruppe, eine substituierte oder unsubstituierte Phenylgruppe, eine substituierte oder unsubstituierte Benzylgruppe oder eine substituierte oder unsubstituierte Hetero-arylgruppe darstellt;
**R5** gleich Wasserstoff, einer gesättigten (C₁-C₁₂)-Alkylgruppe, einer substituierten oder unsubstituierten Phenylgruppe oder einer C(O)O-(C₁-C₁₂)-Alkylgruppe;
**R6, R7, R8** und **R9** gleich oder verschieden sein können und unabhängig voneinander Wasserstoff, ein Halogenatom (F, Cl, Br, J), eine gesättigte oder ungesättigte (C₁-C₁₂)-Alkylgruppe, eine Hydroxygruppe, eine (C₁-C₁₂)-Alkoxygruppe, eine Nitrogruppe, eine Aminogruppe, eine (C₁-C₁₂)-Alkylaminogruppe oder eine Di(C₁-C₁₂)-alkylaminogruppe darstellen; und
**A⁻** gleich einem Anion einer organischen oder anorganischen Säure ist.

Unter den vorgenannten Verbindungen der Formel (I) sind solche bevorzugt, bei denen **R1** gleich einer gesättigten oder ungesättigten
(C₁-C₁₂)-Alkylgruppe und **R4** gleich einer gesättigten oder ungesättigten (C₁-C₁₂)-Alkylgruppe oder einer substituierten oder unsubstituierten Phenylgruppe ist. Besonders bevorzugt sind Verbindungen der Formel (I) bei denen **R1** gleich einer gesättigten (C₁-C₁₂)-Alkylgruppe und **R4** gleich einer gesättigten (C₁-C₁₂)-Alkylgruppe oder einer unsubstituierten Phenylgruppe ist.
**A⁻** ist vorzugsweise gleich Chlorid, Bromid, Jodid, Hydrogensulfat, Sulfat, Toluolsulfonat, Benzolsulfonat, Monomethylsulfat, Hexafluorphosphat, Hexafluorantimonat, Tetrafluorborat, Tetraphenylborat, Formiat, Acetat oder Propionat, wobei das Chloridion, das Bromidion und das Monomethylsulfation besonders bevorzugt sind.

Als geeignete Verbindung der allgemeinen Formel (I) können beispielsweise genannt werden:
3-Methyl-2-[(1-methyl-2-phenyl-1H-indol-3-yl)azo]-thiazolium-chlorid, 3-Methyl-2-[(1-methyl-2-phenyl-1H-indol-3-yl)azo]-thiazolium-bromid, 3-Methyl-2-[(1-methyl-2-phenyl-1H-indol-3-yl)azo]-thiazolium-monomethylsulfat, 3,4-Dimethyl-2-[(1-methyl-2-phenyl-1H-indol-3-yl)azo]-thiazolium-chlorid, 3,4-Dimethyl-2-[(1-methyl-2-phenyl-1H-indol-3-yl)azo]-thiazolium-bromid, 3,4-Dimethyl-2-[(1-methyl-2-phenyl-1H-indol-3-yl)azo]-thiazolium-monomethylsulfat, 3,5-Dimethyl-2-[(1-methyl-2-phenyl-1H-indol-3-yl)azo]-thiazolium-chlorid, 3,5-Dimethyl-2-[(1-methyl-2-phenyl-1H-indol-3-yl)azo]-thiazolium-bromid, 3,5-Dimethyl-2-[(1-methyl-2-phenyl-1H-indol-3-yl)azo]-thiazolium-monomethylsulfat, 3,4,5-Trimethyl-2-[(1-methyl-2-phenyl-1 H-indol-3-yl)azo]-thiazolium-chlorid, 3,4,5-Trimethyl-2-[(1-methyl-2-phenyl-1 H-indol-3-yl)azo]-thiazolium-bromid, 3,4,5-Trimethyl-2-[(1-methyl-2-phenyl-1H-indol-3-yl)azo]-thiazolium-monomethylsulfat, 5-Brom-3-methyl-2-[(1-methyl-2-phenyl-1H-indol-3-yl)azo]-thiazolium-chlorid, 5-Brom-3-methyl-2-[(1-methyl-2-phenyl-1 H-indol-3-yl)azo]-thiazolium-bromid, 5-Brom-3-methyl-2-[(1-methyl-2-phenyl-1H-indol-3-yl)azo]-thiazolium-monomethylsulfat, 5-Methoxy-3-methyl-2-[(1-methyl-2-phenyl-1H-indol-3-yl)azo]-thiazolium-chlorid, 5-Methoxy-3-methyl-2-[(1-methyl-2-phenyl-1H-indol-3-yl)azo]-thiazolium-bromid, 5-Methoxy-3-methyl-2-[(1-methyl-2-phenyl-1H-indol-3-yl)azo]-thiazolium-monomethylsulfat, 5-Diethylamino-3-methyl-2-[(1-methyl-2-phenyl-1H-indol-3-yl)azo]-thiazolium-chlorid, 5-Diethylamino-3-methyl-2-[(1-methyl-2-phenyl-1 H-indol-3-yl)azo]-thiazolium-bromid, 5-Diethylamino-3-methyl-2-[(1-methyl-2-phenyl-1H-indol-3-yl)azo]-thiazolium-monomethylsulfat, 3-Methyl-2-[(1-methyl-2-phenyl-1H-indol-3-yl)azo]-5-nitro-thiazolium-chlorid, 3-Methyl-2-[(1-methyl-2-phenyl-1 H-indol-3-yl)azo]-5-nitro-thiazolium-bromid, 3-Methyl-2-[(1-methyl-2-phenyl-1H-indol-3-yl)azo]-5-nitro-thiazolium-monomethylsulfat, 3-Methyl-2-[(1,2-dimethyl-1 H-indol-3-yl)azo]-thiazolium-chlorid, 3-Methyl-2-[(1,2-dimethyl-1 H-indol-3-yl)azo]-thiazolium-bromid, 3-Methyl-2-[(1,2-dimethyl-1 H-indol-3-yl)azo]-thiazolium-monomethylsulfat, 3,4-Dimethyl-2-[(1,2-dimethyl-1H-indol-3-yl)azo]-thiazolium-chlorid, 3,4-Dimethyl-2-[(1,2-dimethyl-1H-indol-3-yl)azo]-thiazolium-bromid, 3,4-Dimethyl-2-[(1,2-dimethyl-1 H-indol-3-yl)azo]-thiazolium-monomethylsulfat, 3,5-Dimethyl-2-[(1,2-dimethyl-1H-indol-3-yl)azo]-thiazolium-chlorid, 3,5-Dimethyl-2-[(1 ,2-dimethyl-1 H-indol- . 3-yl)azo]-thiazolium-bromid, 3,5-Dimethyl-2-[(1,2-dimethyl-1H-indol-3-yl)azo]-thiazolium-monomethylsulfat, 3,4,5-Trimethyl-2-[(1,2-dimethyl-1H-indol-3-yl)azo]-thiazolium-chlorid, 3,4,5-Trimethyl-2-[(1 ,2-dimethyl-1H-indol-3-yl)azo]-thiazolium-bromid, 3,4,5-Trimethyl-2-[(1,2-dimethyl-1H-indol-3-yl)azo]-thiazolium-monomethylsulfat, 5-Brom-3-methyl-2-[(1,2-dimethyl-1H-indol-3-yl)azo]-thiazolium-chlorid, 5-Brom-3-methyl-2-[(1,2-dimethyl-1H-indol-3-yl)azo]-thiazolium-bromid, 5-Brom-3-methyl-2-[(1,2-dimethyl-1H-indol-3-yl)azo]-thiazolium-monomethylsulfat, 5-Methoxy-3-methyl-2-[(1,2-dimethyl-1H-indol-3-yl)azo]-thiazolium-chlorid, 5-Methoxy-3-methyl-2-[(1,2-dimethyl-1H-indol-3-yl)azo]-thiazolium-bromid, 5-Methoxy-3-methyl-2-[(1,2-dimethyl-1 H-indol-3-yl)azo]-thiazolium-monomethylsulfat, 5-Diethylamino-3-methyl-2-[(1,2-dimethyl-1H-indol-3-yl)azo]-thiazolium-chlorid, 5-Diethylamino-3-methyl-2-[(1,2-dimethyl-1H-indol-3-yl)azo]-thiazolium-bromid, 5-Diethylamino-3-methyl-2-[(1,2-dimethyl-1H-indol-3-yl)azo]-thiazolium-monomethylsulfat, 3-Methyl-2-[(1,2-dimethyl-1H-indol-3-yl)azo]-5-nitro-thiazolium-chlorid, 3-Methyl-2-[(1,2-dimethyl-1H-indol-3-yl)azo]-5-nitro-thiazolium-bromid, 3-Methyl-2-[(1,2-dimethyl-1 H-indol-3-yl)azo]-5-nitro-thiazolium-monomethylsulfat, 2-[(1-Ethyl-2-phenyl-1H-indol-3-yl)azo]-3-methyl-thiazolium-chlorid, 2-[(1-Ethyl-2-phenyl-1H-indol-3-yl)azo]-3-methyl-thiazolium-bromid, 2-[(1-Ethyl-2-phenyl-1H-indol-3-yl)azo]-3-methyl-thiazolium-monomethylsulfat, 2-[(1-Ethyl-2-phenyl-1H-indol-3-yl)azo]-3,4-dimethyl-thiazolium-chlorid, 2-[(1-Ethyl-2-phenyl-1H-indol-3-yl)azo]-3,4-dimethyl-thiazolium-bromid, 2-[(1-Ethyl-2-phenyl-1H-indol-3-yl)azo]-3,4-dimethyl-thiazolium-monomethylsulfat, 2-[(1-Ethyl-2-phenyl-1H-indol-3-y1)azo]-3,5-dimethyl-thiazolium-chlorid2-[(1-Ethyl-2-phenyl-1H-indol-3-yl)azo]-3,5-dimethyl-thiazolium-bromid, 2-[(1-Ethyl-2-phenyl-1H-indol-3-yl)azo]-3,5-dimethyl-thiazolium-monomethylsulfat, 2-[(1-Ethyl-2-phenyl-1H-indol-3-yl)azo]-3,4,5-trimethyl-thiazolium-chlorid, 2-[(1-Ethyl-2-phenyl-1 H-indol-3-yl)azo]-3,4,5-trimethyl-thiazolium-bromid, 2-[(1-Ethyl-2-phenyl-1H-indol-3-yl)azo]-3,4,5-trimethyl-thiazolium-monomethylsulfat, 5-Brom-2-[(1-ethyl-2-phenyl-1H-indol-3-yl)azo]-3-methyl-thiazolium-chlorid, 5-Brom-2-[(1-ethyl-2-phenyl-1 H-indol-3-yl)azo]-3-methyl-thiazolium-bromid, 5-Brom-2-[(1-ethyl-2-phenyl-1 H-indol-3-yl)azo]-3-methyl-thiazolium-monomethylsulfat, 2-[(1-Ethyl-2-phenyl-1H-indol-3-yl)azo]-5-methoxy-3-methyl-thiazolium-chlorid, 2-[(1-Ethyl-2-phenyl-1H-indol-3-yl)azo]-5-methoxy-3-methyl-thiazolium-bromid, 2-[(1-Ethyl-2-phenyl-1H-indol-3-yl)azo]-5-methoxy-3-methyl-thiazolium-monomethylsulfat, 5-Diethylamino-2-[(1-ethyl-2-phenyl-1H-indol-3-yl)azo]-3-methyl-thiazolium-chlorid, 5-Diethylamino-2-[(1-ethyl-2-phenyl-1 H-indol-3-yl)azo]-3-methyl-thiazolium-bromid, 5-Diethylamino-2-[(1-ethyl-2-phenyl-1H-indol-3-yl)azo]-3-methyl-thiazolium-monomethylsulfat, 2-[(1-Ethyl-2-phenyl-1H-indol-3-yl)azo]-3-methyl-5-nitro-thiazolium-chlorid, 2-[(1-Ethyl-2-phenyl-1H-indol-3-yl)azo]-3-methyl-5-nitro-thiazolium-bromid, 2-[(1-Ethyl-2-phenyl-1H-indol-3-yl)azo]-3-methyl-5-nitro-thiazolium-monomethylsulfat, 3-Methyl-2-[(1,2-diphenyl-1 H-indol-3-yl)azo]-thiazolium-chlorid, 3-Methyl-2-[(1,2-diphenyl-1 H-indol-3-yl)azo]-thiazolium-bromid, 3-Methyl-2-[(1,2-diphenyl-1 H-indol-3-yl)azo]-thiazolium- monomethylsulfat, 3,4-Dimethyl-2-[(1,2-diphenyl-1H-indol-3-yl)azo]-thiazolium-chlorid, 3,4-Dimethyl-2-[(1,2-diphenyl-1 H-indol-3-yl)azo]-thiazolium-bromid, 3,4-Dimethyl-2-[(1,2-diphenyl-1 H-indol-3-yl)azo]-thiazolium-monomethylsulfat, 3,5-Dimethyl-2-[(1,2-diphenyl-1H-indol-3-yl)azo]-thiazolium-chlorid, 3,5-Dimethyl-2-[(1,2-diphenyl-1 H-indol-3-yl)azo]-thiazolium-bromid, 3,5-Dimethyl-2-[(1,2-diphenyl-1 H-indol-3-yl)azo]-thiazolium-monomethylsulfat, 3,4,5-Trimethyl-2-[(1,2-diphenyl-1 H-indol-3-yl)azo]-thiazolium-chlorid, 3,4,5-Trimethyl-2-[(1,2-diphenyl-1H-indol-3-yl)azo]-thiazolium-bromid, 3,4,5-Trimethyl-2-[(1 ,2-diphenyl-1 H-indol-3-yl)azo]-thiazolium-monomethylsulfat, 5-Brom-3-methyl-2-[(1,2-diphenyl-1H-indol-3-yl)azo]-thiazolium-chlorid, 5-Brom-3-methyl-2-[(1,2-diphenyl-1 H-indol-3-yl)azo]-thiazolium-bromid, 5-Brom-3-methyl-2-[(1,2-diphenyl-1 H-indol-3-yl)azo]-thiazolium-monomethylsulfat, 5-Methoxy-3-methyl-2-[(1,2-diphenyl-1H-indol-3-yl)azo]-thiazolium-chlorid, 5-Methoxy-3-methyl-2-[(1,2-diphenyl-1H-indol-3-yl)azo]-thiazolium-bromid, 5-Methoxy-3-methyl-2-[(1,2-diphenyl-1 H-indol-3-yl)azo]-thiazolium-monomethylsulfat, 5-Diethylamino-3-methyl-2-[(1,2-diphenyl-1H-indol-3-yl)azo]-thiazolium-chlorid, 5-Diethylamino-3-methyl-2-[(1,2-diphenyl-1H-indol-3-yl)azo]-thiazolium-bromid, 5-Diethylamino-3-methyl-2-[(1,2-diphenyl-1 H-indol-3-yl)azo]-thiazolium-monomethylsulfat, 3-Methyl-5-nitro-2-[(1,2-diphenyl-1H-indol-3-yl)azo]-thiazolium-chlorid, 3-Methyl-5-nitro-2-[(1,2-diphenyl-1H-indol-3-yl)azo]-thiazolium-bromid, 3-Methyl-5-nitro-2-[(1,2-diphenyl-1H-indol-3-yl)azo]-thiazolium-monomethylsulfat, 3-Ethyl-2-[(1-ethyl-2-phenyl-1H-indol-3-yl)azo]-thiazolium-chlorid, 3-Ethyl-2-[(1-ethyl-2-phenyl-1H-indol-3-yl)azo]-thiazolium-bromid, 3-Ethyl-2-[(1-ethyl-2-phenyl-1 H-indol-3-yl)azo]-thiazolium-monomethylsulfat, 3-Ethyl-2-[(1-ethyl-2-phenyl-1H-indol-3-yl)azo]-4-methyl-thiazolium-chlorid, 3-Ethyl-2-[(1-ethyl-2-phenyl-1H-indol-3-yl)azo]-4-methyl-thiazolium-bromid, 3-Ethyl-2-[(1-ethyl-2-phenyl-1H-indol-3-yl)azo]-4-methyl-thiazolium- monomethylsulfat, 3-Ethyl-2-[(1-ethyl-2-phenyl-1 H-indol-3-yl)azo]-5-methyl-thiazolium-chlorid, 3-Ethyl-2-[(1-ethyl-2-phenyl-1H-indol-3-yl)azo]-5-methyl-thiazolium-bromid, 3-Ethyl-2-[(1-ethyl-2-phenyl-1H-indol-3-yl)azo]-5-methyl-thiazolium- monomethylsulfat,3-Ethyl-2-[(1-ethyl-2-phenyl-1H-indol-3-yl)azo]-4,5-dimethyl-thiazolium-chlorid, 3-Ethyl-2-[(1-ethyl-2-phenyl-1H-indol-3-yl)azo]-4,5-dimethyl-thiazolium-bromid, 3-Ethyl-2-[(1-ethyl-2-phenyl-1 H-indol-3-yl)azo]-4,5-dimethyl-thiazolium-monomethylsulfat, 5-Brom-3-ethyl-2-[(1-ethyl-2-phenyl-1H-indol-3-yl)azo]-thiazolium-chlorid, 5-Brom-3-ethyl-2-[(1-ethyl-2-phenyl-1H-indol-3-yl)azo]-thiazolium-bromid, 5-Brom-3-ethyl-2-[(1-ethyl-2-phenyl-1H-indol-3-yl)azol-thiazolium-monomethylsulfat, 3-Ethyl-2-[(1-ethyl-2-phenyl-1 H-indol-3-yl)azo]-5-methoxy-thiazolium-chlorid, 3-Ethyl-2-[(1-ethyl-2-phenyl-1H-indol-3-yl)azo]-5-methoxy-thiazolium-bromid, 3-Ethyl-2-[(1-ethyl-2-phenyl-1H-indol-3-yl)azo]-5-methoxy-thiazolium-monomethylsulfat, 3-Ethyl-5-diethylamino-2-[(1-ethyl-2-phenyl-1H-indol-3-yl)azo]-thiazolium-chlorid, 3-Ethyl-5-diethylamino-2-[(1-ethyl-2-phenyl-1H-indol-3-yl)azo]-thiazolium-bromid, 3-Ethyl-5-diethylamino-2-[(1-ethyl-2-phenyl-1H-indol-3-yl)azo]-thiazolium-monomethylsulfat, 3-Ethyl-2-[(1-methyl-2-phenyl-1H-indol-3-yl)azo]-thiazolium-chlorid, 3-Ethyl-2-[(1-methyl-2-phenyl-1H-indol-3-yl)azo]-thiazolium-bromid, 3-Ethyl-2-[(1-methyl-2-phenyl-1H-indol-3-yl)azo]-thiazolium-monomethylsulfat, 2-[(1-Methyl-2-phenyl-1 H-indol-3-yl)azo]-3-propyl-thiazolium-chlorid, 2-[(1-Methyl-2-phenyl-1H-indol-3-yl)azo]-3-propyl-thiazolium-bromid, 2-[(1-Methyl-2-phenyl-1H-indol-3-yl)azo]-3-propyl-thiazolium-monomethylsulfat, 3-Hydroxyethyl-2-[(1-methyl-2-phenyl-1 H-indol-3-yl)azo]-thiazolium-chlorid, 3-Hydroxyethyl-2-[(1-methyl-2-phenyl-1H-indol-3-yl)azo]-thiazolium-bromid, 3-Hydroxyethyl-2-[(1-methyl-2-phenyl-1H-indol-3-yl)azo]-thiazolium-monomethylsulfat, 2-[(1-Methyl-2-phenyl-1 H-indol-3-yl)azo]-3-(2-propenyl)-thiazolium-chlorid, 2-[(1-Methyl-2-phenyl-1H-indol-3-yl)azo]-3-(2-propenyl)-thiazolium-bromid und 2-[(1-Methyl-2-phenyl-1H-indol-3-yl)azo]-3-(2-propenyl)-thiazolium-monomethylsulfat.

Besonders bevorzugte Verbindungen der Formel (I) sind 3-Methyl-2-[(1-methyl-2-phenyl-1 H-indol-3-yl)azo]-thiazolium-chlorid, 3-Methyl-2-[(1-methyl-2-phenyl-1 H-indol-3-yl)azo]-thiazolium-bromid, 3-Methyl-2-[(1-methyl-2-phenyl-1 H-indol-3-yl)azo]-thiazolium-monomethylsulfat, 3,4-Dimethyl-2-[(1-methyl-2-phenyl-1H-indol-3-yl)azo]-thiazolium-chlorid, 3,4-Dimethyl-2-[(1-methyl-2-phenyl-1H-indol-3-yl)azo]-thiazolium-bromid, 3,4-Dimethyl-2-[(1-methyl-2-phenyl-1H-indol-3-yl)azo]-thiazolium-monomethylsulfat, 3,5-Dimethyl-2-[(1-methyl-2-phenyl-1H-indol-3-yl)azo]-thiazolium-chlorid, 3,5-Dimethyl-2-[(1-methyl-2-phenyl-1H-indol-3-yl)azo]-thiazolium-bromid, 3,5-Dimethyl-2-[(1-methyl-2-phenyl-1H-indol-3-yl)azo]-thiazolium-monomethylsulfat, 3,4,5-Trimethyl-2-[(1-methyl-2-phenyl-1H-indol-3-yl)azo]-thiazolium-chlorid, 3,4,5-Trimethyl-2-[(1-methyl-2-phenyl-1 H-indol-3-yl)azo]-thiazolium-bromid, 3,4,5-Trimethyl-2-[(1-methyl-2-phenyl-1 H-indol-3-yl)azo]-thiazolium-monomethylsulfat, 5-Brom-3-methyl-2-[(1-methyl-2-phenyl-1H-indol-3-yl)azol-thiazolium-chlorid, 5-Brom-3-methyl-2-[(1-methyl-2-phenyl-1 H-indol-3-yl)azo]-thiazolium-bromid, 5-Brom-3-methyl-2-[(1-methyl-2-phenyl-1H-indol-3-yl)azo]-thiazolium-monomethylsulfat, 5-Methoxy-3-methyl-2-[(1-methyl-2-phenyl-1H-indol-3-yl)azo]-thiazolium-chlorid, 5-Methoxy-3-methyl-2-[(1-methyl-2-phenyl-1H-indol-3-yl)azo]-thiazolium-bromid, 5-Methoxy-3-methyl-2-[(1-methyl-2-phenyl-1 H-indol-3-yl)azo]-thiazolium-monomethylsulfat, 3-Methyl-2-[(1,2-dimethyl-1 H-indol-3-yl)azo]-thiazolium-chlorid, 3-Methyl-2-[(1,2-dimethyl-1 H-indol-3-yl)azo]-thiazolium-bromid, 3-Methyl-2-[(1,2-dimethyl-1 H-indol-3-yl)azo]-thiazolium-monomethylsulfat, 3,4-Dimethyl-2-[(1,2-dimethyl-1 H-indol-3-yl)azo]-thiazolium-chlorid, 3,4-Dimethyl-2-[(1,2-dimethyl-1H-indol-3-yl)azo]-thiazolium-bromid, 3,4-Dimethyl-2-[(1,2-dimethyl-1 H-indol-3-yl)azo]-thiazolium-monomethylsulfat, 3,5-Dimethyl-2-[(1,2-dimethyl-1 H-indol-3-yl)azo]-thiazolium-chlorid, 3,5-Dimethyl-2-[(1,2-dimethyl-1H-indol-3-yl)azo]-thiazolium-bromid, 3,5-Dimethyl-2-[(1,2-dimethyl-1 H-indol-3-yl)azo]-thiazolium-monomethylsulfat, 3,4,5-Trimethyl-2-[(1,2-dimethyl-1H-indol-3-yl)azo]-thiazolium-chlorid, 3, 4,5-Trimethyl-2-[(1 ,2-dimethyl-1 H-indol-3-yl)azo]-thiazolium-bromid, 3, 4,5-Trimethyl-2-[(1,2-dimethyl-1H-indol-3-yl)azo]-thiazolium-monomethylsulfat, 5-Brom-3-methyl-2-[(1,2-dimethyl-1H-indol-3-yl)azo]-thiazolium-chlorid, 5-Brom-3-methyl-2-[(1,2-dimethyl-1 H-indol-3-yl)azo]-thiazolium-bromid, 5-Brom-3-methyl-2-[(1,2-dimethyl-1 H-indol-3-yl)azo]-thiazolium-monomethylsulfat, 5-Methoxy-3-methyl-2-[(1,2-dimethyl-1H-indol-3-yl)azo]-thiazolium-chlorid, 5-Methoxy-3-methyl-2-[(1,2-dimethyl-1H-indol-3-yl)azo]-thiazolium-bromid, 5-Methoxy-3-methyl-2-[(1,2-dimethyl-1 H-indol-3-yl)azo]-thiazolium-monomethylsulfat, 3-Methyl-2-[(1,2-dimethyl-1H-indol-3-yl)azo]-5-nitro-thiazolium-chlorid, 3-Methyl-2-[(1,2-dimethyl-1H-indol-3-yl)azo]-5-nitro-thiazolium-bromid, 3-Methyl-2-[(1,2-dimethyl-1H-indol-3-yl)azo]-5-nitro-thiazolium-monomethylsulfat, 3-Methyl-2-[(1,2-diphenyl-1H-indol-3-yl)azo]-thiazolium-chlorid, 3-Methyl-2-[(1,2-diphenyl-1 H-indol-3-yl)azo]-thiazolium-bromid, 3-Methyl-2-[(1,2-diphenyl-1H-indol-3-yl)azo]-thiazolium-monomethylsulfat, 3,4-Dimethyl-2-[(1,2-diphenyl-1 H-indol-3-yl)azo]-thiazolium-chlorid, 3,4-Dimethyl-2-[(1 ,2-diphenyl-1 H-indol-3-yl)azo]-thiazolium-bromid, 3,4-Dimethyl-2-[(1,2-diphenyl-1H-indol-3-yl)azo]-thiazolium-monomethylsulfat, 3,5-Dimethyl-2-[(1 ,2-diphenyl-1 H-indol-3-yl)azo]-thiazolium-chlorid, 3,5-Dimethyl-2-[(1,2-diphenyl-1 H-indol-3-yl)azo]-thiazolium-bromid, 3,5-Dimethyl-2-[(1,2-diphenyl-1 H-indol-3-yl)azo]-thiazolium-monomethylsulfat, 3,4,5-Trimethyl-2-[(1,2-diphenyl-1 H-indol-3-yl)azo]-thiazolium-chlorid, 3,4,5-Trimethyl-2-[(1,2-diphenyl-1 H-indol-3-yl)azo]-thiazolium-bromid, 3,4,5-Trimethyl-2-[(1,2-diphenyl-1 H-indol-3-yl)azo]-thiazolium-monomethylsulfat, 5-Brom-3-methyl-2-[(1,2-diphenyl-1H-indol-3-yl)azo]-thiazolium-chlorid, 5-Brom-3-methyl-2-[(1,2-diphenyl-1H-indol-3-yl)azo]-thiazolium-bromid, 5-Brom-3-methyl-2-[(1,2-diphenyl-1 H-indol-3-yl)azo]-thiazolium-monomethylsulfat, 5-Methoxy-3-methyl-2-[(1,2-diphenyl-1H-indol-3-yl)azo]-thiazolium-chlorid, 5-Methoxy-3-methyl-2-[(1,2-diphenyl-1 H-indol-3-yl)azo]-thiazolium-bromid und 5-Methoxy-3-methyl-2-[(1,2-diphenyl-1 H-indol-3-yl)azo]-thiazolium-monomethylsulfat.

Die Verbindungen der Formel (I) sind in dem erfindungsgemäßen Färbemittel vorzugsweise in einer Menge von 0,01 bis 10 Gewichtsprozent, insbesondere 0,1 bis 8 Gewichtsprozent, enthalten.

Das erfindungsgemäße Färbemittel kann neben den Farbstoffen der Formel (1) zusätzlich noch weitere bekannte, gegenüber Oxidationsmitteln stabile, direktfärbende Farbstoffe enthalten, wie zum Beispiel 3-(2',6'-Diaminopyridyl-3'-azo)-pyridin (= 2,6-Diamino-3-((pyridin-3-yl)azo)pyridin), N,N-Di(2-hydroxyethyl)-3-methyl-4-((4-nitrophenyl)-azo)-anilin (Disperse Red 17, Cl 11210), 3-Diethylamino-7-(4-dimethylaminophenylazo)-5-phenyl-phenaziniumchlorid (Cl 11050), 4-(2-Thiazolylazo)-resorcin, 4-((4-Phenylamino)azo)benzosulfonsäurenatriumsalz (Orange IV), 1-((3-Aminopropyl)amino)-9,10-anthracendion (HC Red No. 8), 3',3",4,5,5',5",6,7-Octabromphenolsulfonphtalein (Tetrabromphenol Blue), 1-((4-Amino-3,5-dimethylphenyl)-(2,6-dichlorphenyl)-methylen)-3,5-dimethyl-4-imino-2,5-cyclo-hexadien-Phosphorsäure (1:1) (Basic Blue 77), 3',3",5',5"-Tetrabrom-m-kresolsulfonphthalein, 2,4-Dinitro-1-naphthol-7-sulfonsäure-Dinatriumsalz (Acid Yellow 1, Cl 10316), 4-[2'-Hydroxy-1'-naphthyl)azo]-benzosulfonsäure-Natriumsalz (Acid Orange 7, Cl 15510), 3',6'-Dihydroxy-2',4',5',7'-tetraiodospiro-[isobenzo-furan-1(3H), 9'(9H)-xanthen]-3-on-Dinatriumsalz (Acid Red 51, Cl 45430), 6-Hydroxy-5-((2-methoxy-5-methyl-4-sulfophenyl)azo)-2-Naphthalinsulfonsäure-dinatriumsalz (FD&C Red 40, Cl 16035), 2,4-Dinitro-1-naphthol-Natriumsalz (Acid Yellow 24; Cl 10315), 2',4',5',7'-tetrabrom-4,5,6,7-tetrachlor-3',6'-dihydroxy-Spiro(isobenzofuran-1(3H), 9'[9H]xanthen]-3-on-dinatriumsalz (Acid Red 92; Cl 45410), 4-(2-Hydroxy-1-naphthylazo)-3-methyl-benzolsulfonsäure-natriumsalz (Acid Orange 8, Cl 15575), 2-Amino-1,4-naphthalindion, Dithizon (1,5-Diphenylthiocarbazon), N-(2-Hydroxyethyl))-2-nitro-4-trifluormethyl)anilin (HC Yellow 13), N-(2-hydroxyethyl)-4-nitro-anilin und 4-Chlor-N-(2,3-dihydroxypropyl)-2-nitro-anilin, 1-Methyl-4-((methylphenylhydrazono)methyl)pyridinium-methylsulfat (Basic Yellow No. 87), 3-((4,5-Dihydro-3-methyl-5-oxo-1-phenyl-1 H-pyrazol-4-yl)azo)-N ,N ,N-trimethyl-benzenaminium-chlorid, 3-[(3-Methyl-5-hydroxy-1-phenyl-1 H-pyrazol-4-yl)azo]-trimethylammonio-benzol-chlorid (Basic Yellow No. 57), 2-((4-Aminophenyl)azo)-1,3-dimethyl-1 H-imidazol-3-ium-chlorid (Basic Orange No. 31), 1,4-Dimethyl-5-[(4-(dimethylamino)phenyl)azo]-1,2,4-triazolium-chlorid (Basic Red No. 22, CI11055), 2-((4-(Dimethylamino)phenyl)azo)-1,3-dimethyl-1H-imidazolium-chlorid (Basic Red No. 51), 1,4-Dimethyl-5-[[4-[methyl(phenylmethyl)-amino]phenyl]azo]-1,2,4-triazolium-bromid (Basic Red No. 46), N,N,N-Trimethyl-3-{[4-(methylamino)-9,10-dioxo-9,10-dihydro-1-anthracenyl]-amino}-1-propanaminium-methylsulfat, N,N-Dimethyl-3-{[4-(methylamino)-9,10-dioxo-9,10-dihydro-1-anthracenyl]amino}-N-propyl-1-propanaminium-chlorid und N,N-Dimethyl-3-{[4-(methylamino)-9,10-dioxo-9,10-dihydro-1-anthracenyl]aminol-N-propyl-1-propanaminium-bromid.

Der Gesamtgehalt an Farbstoffen der Formel (I) und direktfärbende Farbstoffen in dem erfindungsgemäßen Färbemittel beträgt etwa 0,01 bis 15 Gewichtsprozent, insbesondere etwa 0,1 bis 12 Gewichtsprozent.

Selbstverständlich können dem erfindungsgemäßen Färbemittel auch Oxidationsfarbstoffvorstufen (Entwicklersubstanzen und Kupplersubstanzen), wie zum Beispiel o,p,m-Phenylendiamine, o,p,m-Aminophenole, Diphenole oder 4,5-Diaminopyrazole zugesetzt werden.
Diese zusätzlichen Entwicklersubstanzen und Kupplersubstanzen können in dem Färbemittel jeweils in einer Gesamtmenge von etwa 0,01 bis 20 Gewichtsprozent, vorzugsweise etwa 0,1 bis 10 Gewichtsprozent und insbesondere 0,1 bis 5 Gewichtsprozent, enthalten sein.

Die Zubereitungsform des erfindungsgemäßen Färbemittels kann beispielsweise eine Lösung, insbesondere eine wässrige oder wässrigalkoholische Lösung sein, eine Creme, ein Gel, eine tensidhaltige schäumende Lösung (Shampoo, Aerosol), eine Emulsion oder ein anderer für die Anwendung auf dem Haar geeigneter, wasserhaltiger Träger sein. Es ist ebenfalls möglich, dass das erfindungsgemäße Färbemittel in Form von Pellets, Granulaten oder Pulvern vorliegt, die vor der Anwendung in einer wässrigen Zubereitung -beispielsweise in Wasser oder einer wässrigen Oxidationsmittelzubereitung- gelöst werden. Die Zusammensetzung dieser Mittel stellt eine Mischung der Farbstoffkomponente mit den für solche Zubereitungen üblichen Zusätzen dar.

Übliche Zusätze in Lösungen, Cremes, Emulsionen oder Gelen sind zum Beispiel Lösungsmittel wie Wasser, niedere aliphatische einwertige oder mehrwertige Alkohole, deren Ester und Ether, beispielsweise Alkanole, insbesondere mit 1 bis 4C-Atomen, beispielsweise Ethanol, Propanol oder Isopropanol, Butanol, Isobutanol, zweiwertige und dreiwertige Alkohole, insbesondere solche mit 2 bis 6 C-Atomen, beispielweise Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Polyalkylenglykole, wie Triethylenglykol, Polyethylenglykol, Tripropylenglykol, Polypropylenglykol, niedere Alkylether von mehrwertigen Alkoholen, wie Ethylenglykolmonomethylether, Ethylenglykolmonoethylether, Ethylenglykolmonopropylether, Ethylenglykolmonobuthylether, Diethylenglykolmonomethylether, Diethylenglykolmonoethylether, Triethylenglykolmonomethylether oder Triethylenglykolmonoethylether, Ketone und Ketoalkohole, insbesondere solche mit 3 bis 7 C-Atomen, wie zum Beispiel Aceton, Methylethylketon, Diethylketon, Methylisobutylketon, Methylphenylketon, Cyclopentanon, Cyclohexanon, und Diacetonalkohol, Ether, wie zum Beispiel Dibuthylether, Tetrahydrofuran, Dioxan, Diisopropylether, Ester wie zum Beispiel Ethylformiat, Methylformiat, Methylacetat, Ethylacetat, Propylacetat, Butylacetat, Phenylacetat, Ethylenglykolmonoethyletheracetat, und Essigsäurehydroxyethylester, Amide wie zum Beispiel Dimethylformamid und Dimethylacetamid, N-Methylpyrrolidon, sowie Harnstoff, Tetramethylharnstoff und Thiodiglykol.

Weiterhin können in dem erfindungsgemäßen Färbemittel Netzmittel oder Emulgatoren aus den Klassen der anionischen, kationischen, amphoteren, nichtionogenen oder zwitterionischen oberflächenaktiven Substanzen wie Fettalkoholsulfate, oxethylierte Fettalkoholsulfate, Alkylsulfonate, Alkylbenzolsulfonate, α-Olefinsulfonate, Alkyltrimethylammoniumsalze, Alkylbetaine, oxethylierte Fettalkohole, oxethylierte Nonylphenole, Fettsäurealkanolamide, oxethylierte Fettsäureester, Fettalkoholpolyglykolethersulfate, Alkylpolyglucoside, Verdickungsmittel wie höhere Fettalkohole, Stärke, Cellulosederivate, Vaseline, Paraffinöl, Fettsäuren, und andere Fettkomponenten in Emulgieter Form, wasserlöslische polymere Verdickungsmittel wie natürliche Gummen, Guargummi, Xanthangummi, Johannisbrotkernmehl, Pektin, Dextran, Agar-Agar, Amylose, Amylopektin, Dextrine, Tone oder vollsynthetische Hydrokolloide wie zum Beispiel Polyvinylalkohol, sowie außerdem Pflegestoffe wie Lanolinderivate, Cholesterin, Pantothensäure, wasserlöslische kationische Polymere, Proteinderivate, Provitamine, Vitamine, Pflanzenextrakte, Zucker und Betain, Hilfstoffe wie Feuchthaltmittel, Elektrolyte, Antioxidantien, Fettamide, Sequestrierungsmittel, filmbildende Agentien und Konservierungsmittel, enthalten sein. Neben Wasser kann auch ein wasserlöslisches organisches Lösungsmittel oder ein Gemisch derartiger Lösungsmittel sowie ein Wasser/Lösungsmittel-Gemisch verwendet werden.
Die erwähnten Bestandteile werden in den für solche Zwecke üblichen Mengen verwendet, zum Beispiel die Netzmittel und Emulgatoren in Konzentrationen von etwa 0,1 bis 30 Gewichtsprozent, die Verdicker in einer Menge von etwa 0,1 bis 30 Gewichtsprozent und die Pflegestoffe in einer Konzentration von etwa 0,1 bis 5 Gewichtsprozent.

Das gebrauchsfertige erfindungsgemäße Färbemittel wird unmittelbar vor Gebrauch durch Mischen der die Farbstoffe enthaltenden Farbträgermasse mit einem Oxidationsmittel hergestellt.

Als Oxidationsmittel kommen hauptsächlich Wasserstoffperoxid oder dessen Additionsverbindungen an Harnstoff, Melamin, Natriumborat oder Natriumcarbonat in Form einer 1- bis 12-prozentigen, vorzugsweise einer 3- bis 9-prozentigen, wässrigen Lösung, in Betracht. Das Gewichtsverhältnis zwischen Farbträgermasse und Oxidationsmittel beträgt hierbei vorzugsweise etwa 5:1 bis 1:3, insbesondere 1:1 bis 1:2. Größere Mengen an Oxidationsmittel werden vor allem bei höheren Konzentrationen an oxidativen Farbstoffvorstufen im Färbemittel, oder wenn gleichzeitig eine stärkere Bleichung der Keratinfaser (insbesondere der Haare) beabsichtigt ist, verwendet. Für den Fall, dass eine Aufhellung der Keratinfasern von bis zu 6 Tonstufen beabsichtigt ist, ist der Zusatz von Persulfaten, wie zum Beispiel Ammoniumpersulfat, Kaliumpersulfat oder Natriumpersulfat und deren Mischungen, möglich, sofern die verwendeten Farbstoffe der Formel (I) gegenüber Persulfaten stabil sind.

Das pH-Wert des gebrauchsfertigen erfindungsgemäßen Färbemittel stellt sich bei der Mischung der Farbträgermasse mit dem Oxidationsmittel auf einen pH-Wert ein, der durch die pH-Werte der Farbträgermasse des Oxidationsmittel sowie durch das Mischungsverhältnis bestimmt wird.
Das gebrauchsfertige Mittel weist einen basischen pH-Wert von größer 7, vorzugsweise einen pH-Wert von 8 bis 11, auf. Die basische Einstellung erfolgt hierbei vorzugsweise mit Ammoniak, wobei jedoch auch organische Amine, zum Beispiel 2-Amino-2-methyl-1-propanol, Tris(hydroxymethyl)amino-methan, Monoethanolamin und Triethanolamin, oder Mischungen von organischen Aminen und Ammoniak sowie anorganische Basen wie Natriumhydroxid, Kaliumhydroxid, Natriumcarbonat, Natriumhydrogencarbonat, Kaliumcarbonat, Kaliumhydrogencarbonat, Natriumphosphat, Borax (Na₂B₄O₇ x 10H₂O), Dinatriumhydrogenphosphat Verwendung finden können. Bei zu hohen pH-Werten kann mit anorganischen oder organischen Säuren, zum Beispiel Phosphorsäure, Essigsäure, Milchsäure, Ascorbinsäure, Zitronensäure oder Weinsäure, korrigiert werden.

Anschließend trägt man eine für die Färbebehandlung ausreichende Menge, im allgemeinen etwa 30 bis 120 Gramm, dieses Gemisches auf die Keratinfaser auf und läßt das Gemisch bei etwa 15 bis 50 °C, vorzugsweise 30 bis 40 °C, etwa 1 bis 60 Minuten lang, vorzugsweise 5 bis 30 Minuten lang, auf die Keratinfaser einwirken, spült sodann die Keratinfaser mit Wasser aus und trocknet sie. Gegebenenfalls wird im Anschluß an diese Spülung mit einem Shampoo gewaschen und eventuell mit einer schwachen organischen Säure, wie zum Beispiel Zitronensäure oder Weinsäure, nachgespült. Anschließend wird die Keratinfaser getrocknet.

Außerdem ist es möglich, bei Färbungen von unterschiedlich stark geschädigtem Haar (beispielsweise Nachfärbungen schon oxidativ gefärbter Haarpartien), auf die vorgeschädigten Haarpartien (zum Beispiel die Haarspitzen) die Farbträgermasse ohne Oxidationsmittel -pur oder nur mit einer weiteren sauren, neutralen oder basischen wässrigen Komponente verdünnt- aufzutragen, während man auf die gering oder gar nicht vorgeschädigten Haarpartien (beispielsweise den Haaransatz und die Haarlängen) die mit dem Oxidationsmittel vermischte Farbträgermasse aufträgt. Die zur Verdünnung eingesetzte wässrige Komponente kann die vorstehend genannten üblichen Zusätze für Lösungen, Cremes, Emulsionen oder Gelen enthalten. Dieses Verfahren ermöglicht auf die Haarbeschaffenheit abgestimmte Färbungen, die sich durch einen haarschonenden Ausgleich zwischen Ansatz und Spitzen auszeichnen, was bei der Verwendung von üblichen oxidativen Haarfärbemitteln nicht möglich ist, da zum Kuppeln der Farbstoffvorstufen immer ein Oxidationsmittel benötigt wird.

Das erfindungsgemäße Färbemittel ermöglicht Färbungen, die sich durch ihre besondere Farbintensität und Leuchtkraft, einen guten Farbausgleich zwischen geschädigtem und ungeschädigtem Haar (zum Beispiel zwischen Haarspitzen und Haarnachwuchs) sowie durch eine besonders gute Lichtechtheit und Schweißbeständigkeit auszeichnen.

Die Farbstoffe der Formel (I) sind zum Teil an sich bekannt. Sie können in Analogie zu bekannten Herstellungsverfahren, wie zum Beispiel via Azokupplung von 2-Aminothiazol-derivaten mit Indol-Derivaten, und nachfolgende Quaternisierung, hergestellt werden.

Die nachfolgenden Beispiele sollen den Gegenstand der Erfindung näher erläutern, ohne diesen hierauf zu beschränken.

### Beispiele

### Beispiele 1 bis 9:

| | |
|---|---|
| 0.66 g | Farbstoff der Formel (I) |
| 12.5 g | Ethanol |
| 10.0 g | Cetyl-trimethylammonium chlorid |
| ad 100 g | Wasser, vollentsalzt |

### A) Erfindungsgemäß

5 g der vorstehenden Färbelösung werden mit 5 g einer 9 %igen Wasserstoffperoxidlösung vermischt. Die Färbelösung wird durch Zugabe von Ammoniak auf den gewünschten pH-Wert eingestellt. Das erhaltene gebrauchsfertige Haarfärbemittel wird auf dunkelblonde Haare aufgetragen und mit einem Pinsel gleichmäßig verteilt wird. Nach einer Einwirkungszeit von 30 Minuten bei 40 °C wird das Haar mit lauwarmem Wasser ausgespült, mit einem Shampoo gewaschen, mit lauwarmem Wasser ausgespült und sodann getrocknet.

### B) Nicht-erfindunqsqemäß (ohne Wasserstoffperoxid)

5 g der vorstehenden Färbelösung werden mit 5 g Wasser vermischt. Die Färbelösung wird durch Zugabe von Ammoniak auf den gewünschten pH-Wert eingestellt. Das erhaltene gebrauchsfertige Haarfärbemittel wird auf dunkelblondes Haar aufgetragen und mit einem Pinsel gleichmäßig verteilt wird. Nach einer Einwirkungszeit von 30 Minuten bei 40 °C wird das Haar mit lauwarmem Wasser ausgespült, mit einem Shampoo gewaschen, mit lauwarmem Wasser gespült und sodann getrocknet.

Die Färbeergebnisse sind in der nachfolgenden Tabelle 1 zusammengefasst.

**Tabelle 1**

| **Bsp.** | **Verbindung der Formel (I)** | **pH Wert der Mischung** | **Farbton nach dem Färben** |
|---|---|---|---|
| | | | **A: mit H2O2** |
| | | | **B: ohne H2O2** |
| **1** | 3-Methyl-2-[(1-methyl-2-phenyl-1 H-indol-3-yl)azo]-thiazolium- monomethylsulfat | 9,6 | **A)** leuchtendes Rubinrot |
| | | | **B)** dunkles Mahagoni |
| **2** | 3,5-Dimethyl-2-[(1-methyl-2-phenyl-1 H-indol-3-yl)azo]-thiazolium-monomethylsulfat | 8,9 | **A)** leuchtendes Bordeauxrot |
| | | | **B)** dunkles Bordeauxrot |
| **3** | 3,4-Dimethyl-2-[(1-methyl-2-phenyl-1 H-indol-3-yl)azo]-thiazolium-monomethylsulfat | 9,0 | **A)** leuchtendes Bordeauxrot |
| | | | **B)** dunkles Bordeauxrot |
| **4** | 3,4,5-Trimethyl-2-[(1-methyl-2-phenyl-1 H-indol-3-yl)azo]-thiazolium-monomethylsulfat | 9,1 | **A)** leuchtendes Bordeauxrot |
| | | | **B)** dunkles Bordeauxrot |
| **5** | 5-Methoxy-3-methyl-2-[(1-methyl-2-phenyl-1 H-indol-3-yl)azo]-thiazolium-monomethylsulfat | 9,3 | **A)** leuchtendes Bordeauxrot |
| | | | **B)** dunkles Aubergine |
| **6** | 3-Methyl-2-[(1,2-dimethyl-1 H-indol-3-yl)azo]-thiazolium-monomethylsulfat | 9,5 | **A)** leuchtendes Kupfer-orange |
| | | | **B)** dunkles Kupfer |
| **7** | 3,5-Dimethyl-2-[(1,2-dimethyl-1 H-indol-3-yl)azo]-thiazolium-monomethylsulfat | 8,9 | **A)** leuchtendes Mahagoni |
| | | | **B)** dunkles Mahagoni |
| **8** | 3,4-Dimethyl-2-[(1,2-dimethyl-1 H-indol-3-yl)azo]-thiazolium-monomethylsulfat | 9,5 | **A)** leuchtendes Mahagoni |
| | | | **B)** dunkles Mahagoni |
| **9** | 3,4,5-Trimethyl-2-[(1,2-dimethyl-1 H-indol-3-yl)azo]-thiazolium-monomethylsulfat | 9,1 | **A)** leuchtendes Mahagoni |
| | | | **B)** dunkles Mahagoni |

### Beispiele 10 bis 18

| | |
|---|---|
| 0.66 g | Farbstoff der Formel (I) |
| 5,0 g | Ethanol |
| 4,0 g | Decylglucosid |
| 0,2 g | Ethylendiaminotetraessigsäure-Dinatriumsalz |
| ad 100 g | Wasser, vollentsalzt |

### A) Erfindungsgemäß

5 g der vorstehenden Färbelösung werden mit 5 g einer 9 %igen Wasserstoffperoxidlösung vermischt. Die Färbelösung wird durch Zugabe von Ammoniak auf den gewünschten pH-Wert eingestellt. Das erhaltene gebrauchsfertige Haarfärbemittel wird auf trockene dunkelblonde Naturhaare aufgetragen und mit einem Pinsel gleichmäßig verteilt wird. Nach einer Einwirkungszeit von 30 Minuten bei 40 °C wird das Haar mit lauwarmem Wasser ausgespült, mit einem Shampoo gewaschen, mit lauwarmem Wasser ausgespült und sodann getrocknet.

### B) Nicht-erfindungsgemäß (ohne Wasserstoffperoxid)

5 g der vorstehenden Färbelösung werden mit 5 g Wasser vermischt. Die Färbelösung wird durch Zugabe von Ammoniak auf den gewünschten pH-Wert eingestellt. Das erhaltene gebrauchsfertige Haarfärbemittel wird auf trockene dunkelblonde Naturhaare aufgetragen und mit einem Pinsel gleichmäßig verteilt wird. Nach einer Einwirkungszeit von 30 Minuten bei 40 °C wird das Haar mit lauwarmem Wasser ausgespült, mit einem Shampoo gewaschen, mit lauwarmem Wasser gespült und sodann getrocknet.

Die Färbeergebnisse sind in der nachfolgenden Tabelle 2 zusammengefasst.

**Tabelle 2**

| **Bsp.** | **Verbindung der Formel (I)** | **pH Wert der Mischung** | **Farbton nach dem Färben** |
|---|---|---|---|
| | | | **A: mit H2O2** |
| | | | **B: ohne H2O2** |
| **10** | 3-Methyl-2-[(1-methyl-2-phenyl-1 H-indol-3-yl)azo]-thiazolium- monomethylsulfat | 9,6 | **A)** leuchtendes Rubinrot |
| | | | **B)** dunkles Mahagoni |
| **11** | 3,5-Dimethyl-2-[(1-methyl-2-phenyl-1 H-indol-3-yl)azo]-thiazolium-monomethylsulfat | 8,9 | **A)** leuchtendes Bordeauxrot |
| | | | **B)** dunkles Bordeauxrot |
| **12** | 3,4-Dimethyl-2-[(1-methyl-2-phenyl-1H-indol-3-yl)azo]-thiazolium-monomethylsulfat | 9,0 | **A)** leuchtendes Bordeauxrot |
| | | | **B)** dunkles Bordeauxrot |
| **13** | 3,4,5-Trimethyl-2-[(1-methyl-2-phenyl-1 H-indol-3-yl)azo]-thiazolium-monomethylsulfat | 9,1 | **A)** leuchtendes Bordeauxrot |
| | | | **B)** dunkles Bordeauxrot |
| **14** | 5-Methoxy-3-methyl-2-[(1methyl-2-phenyl-1 H-indol-3-yl)azo]-thiazolium-monomethylsulfat | 9,3 | **A)** leuchtendes Bordeauxrot |
| | | | **B)** dunkles Aubergine |
| **15** | 3-Methyl-2-[(1,2-dimethyl-1H-indol-3-yl)azo]-thiazolium-monomethylsulfat | 9,5 | **A)** leuchtendes Kupferorange |
| | | | **B)** dunkles Kupfer |
| **16** | 3,5-Dimethyl-2-[(1,2-dimethyl-1H-indol-3-yl)azo]-thiazolium-monomethylsulfat | 8,9 | **A)** leuchtendes Mahagoni |
| | | | **B)** dunkles Mahagoni |
| **17** | 3,4-Dimethyl-2-[(1,2-dimethyl-1 H-indol-3-yl)azo]-thiazolium-monomethylsulfat | 9,5 | **A)** leuchtendes Mahagoni |
| | | | **B)** dunkles Mahagoni |
| **18** | 3,4,5-Trimethyl-2-[(1,2-dimethyl-1H-indol-3-yl)azo]-thiazolium-monomethylsulfat | 9,1 | **A)** leuchtendes Mahagoni |
| | | | **B)** dunkles Mahagoni |

Alle Prozentangaben in der vorliegenden Anmeldung stellen, sofern nicht anders angegeben, Gewichtsprozente dar.

## Patentansprüche

1. Mittel zur gleichzeitigen Aufhellung und Färbung von Keratinfasern, **dadurch gekennzeichnet, dass** es (a) ein Oxidationsmittel sowie (b) mindestens einen Indolylthiazoliumazofarbstoff der Formel (I) enthält, und (c) einen basischen pH-Wert aufweist, 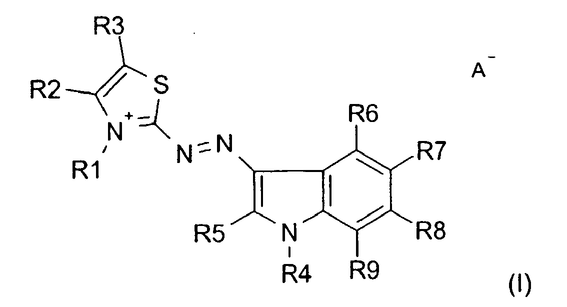 wobei
**R1** eine gesättigte oder ungesättigte (C₁-C₁₂)-Alkylgruppe, eine mit einem Halogenatom substituierte (C₁-C₁₂)-Alkylgruppe, eine Hydroxy-(C₁-C₁₂)-alkylgruppe, eine (C₁-C₆)Alkoxy-(C₁-C₁₂)-alkylgruppe, eine Amino-(C₁-C₁₂)-alkylgruppe, eine (C₁-C₆)-Alkyl amino-(C₁-C₁₂)-alkyl-gruppe, eine Di-(C₁-C₆)-alkylamino-(C₁-C₁₂)-alkylgruppe, eine Cyano-(C₁-C₁₂)-alkylgruppe, eine substituierte oder unsubstituierte Phenylgruppe oder eine substituierte oder unsubstituierte Benzylgruppe darstellt,
**R2** und **R3** gleich oder verschieden sein können und unabhängig voneinander Wasserstoff, ein Halogenatom, eine gesättigte oder ungesättigte (C₁-C₁₂)-Alkylgruppe, eine (C₁-C₁₂)-Alkoxygruppe, eine Nitrogruppe, eine Aminogruppe, eine (C₁-C₁₂)-Alkylaminogruppe, eine Di(C₁-C₁₂)-alkylaminogruppe, eine (C₁-C₁₂)-Hydroxyalkylaminogruppe, eine Di(C₁-C₁₂)-hydroxyalkylaminogruppe, eine substituierte oder unsubstituierte Phenylgruppe oder eine substituierte oder unsubstituierte Heteroarylgruppe darstellen;
**R4** eine gesättigte oder ungesättigte (C₁-C₁₂)-Alkylgruppe, eine mit einem Halogenatom substituierte (C₁-C₁₂)-Alkylgruppe, eine Hydroxy-(C₁-C₁₂)-alkylgruppe, eine (C₁-C₆)Alkoxy-(C₁-C₁₂)-alkylgruppe, eine Amino-(C₁-C₁₂)-alkylgruppe, eine (C₁-C₆)-Alkylamino-(C₁-C₁₂)-alkyl-gruppe, eine Di-(C₁-C₆)-alkylamino-(C₁-C₁₂)-alkylgruppe, eine Cyano-(C₁-C₁₂)-alkylgruppe, eine substituierte oder unsubstituierte Phenylgruppe, eine substituierte oder unsubstituierte Benzylgruppe oder eine substituierte oder unsubstituierte Heteroarylgruppe darstellt;
**R5** gleich Wasserstoff, einer gesättigten (C₁-C₁₂)-Alkylgruppe, einer substituierten oder unsubstituierten Phenylgruppe oder einer C(O)O-(C₁-C₁₂)-Alkylgruppe;
**R6, R7, R8** und **R9** gleich oder verschieden sein können und unabhängig voneinander Wasserstoff, ein Halogenatom, eine gesättigte oder ungesättigte (C₁-C₁₂)-Alkylgruppe, eine Hydroxygruppe, eine (C₁-C₁₂)-Alkoxygruppe, eine Nitrogruppe, eine Aminogruppe, eine (C₁-C₁₂)-Alkylaminogruppe oder eine Di(C₁-C₁₂)-alkylaminogruppe darstellen; und
**A⁻** gleich einem Anion einer organischen oder anorganischen Säure ist.

2. Mittel nach Anspruch 1, **dadurch gekennzeichnet, dass R1** gleich einer gesättigten oder ungesättigten (C₁-C₁₂)-Alkylgruppe und **R4** gleich einer gesättigten oder ungesättigten (C₁-C₁₂)-Alkylgruppe oder einer substituierten oder unsubstituierten Phenylgruppe ist.

3. Mittel nach Anspruch 2, **dadurch gekennzeichnet, dass R1** gleich einer gesättigten (C₁-C₁₂)-Alkylgruppe und **R4** gleich einer gesättigten (C₁-C₁₂)-Alkylgruppe oder einer Phenylgruppe ist

4. Mittel nach einem der Ansprüche 1 bis 3, **dadurch gekennzeichnet, dass A⁻** gleich einem Chlorid-, Bromid-, Jodid-, Hydrogensulfat-, Sulfat-, Toluolsulfonat-, Benzolsulfonat-, Monomethylsulfat-, Hexafluorphosphat-, Hexafluorantimonat-, Tetrafluorborat-, Tetraphenylborat-, Formiat-, Acetat- oder Propionat-Anion ist.

5. Mittel nach einem der Ansprüche 1 bis 4, **dadurch gekennzeichnet, dass** die Verbindung der Formel (I) ausgewählt ist aus 3-Methyl-2-[(1-methyl-2-phenyl-1 H-indol-3-yl)azo]-thiazolium-chlorid, 3-Methyl-2-[(1-methyl-2-phenyl-1 H-indol-3-yl)azo]-thiazolium-bromid, 3-Methyl-2-[(1-methyl-2-phenyl-1 H-indol-3-yl)azo]-thiazolium-monomethylsulfat, 3,4-Dimethyl-2-[(1-methyl-2-phenyl-1H-indol-3-yl)azo]-thiazolium-chlorid, 3,4-Dimethyl-2-[(1-methyl-2-phenyl-1H-indol-3-yl)azo]-thiazolium-bromid, 3,4-Dimethyl-2-[(1-methyl-2-phenyl-1H-indol-3-yl)azo]-thiazolium-monomethylsulfat, 3,5-Dimethyl-2-[(1-methyl-2-phenyl-1H-indol-3-yl)azo]-thiazolium-chlorid, 3,5-Dimethyl-2-[(1-methyl-2-phenyl-1 H-indol-3-yl)azo]-thiazolium-bromid, 3,5-Dimethyl-2-[(1-methyl-2-phenyl-1H-indol-3-yl)azo]-thiazolium-monomethylsulfat, 3,4,5-Trimethyl-2-[(1-methyl-2-phenyl-1H-indol-3-yl)azo]-thiazolium-chlorid, 3,4,5-Trimethyl-2-[(1-methyl-2-phenyl-1 H-indol-3-yl)azo]-thiazolium-bromid, 3,4,5-Trimethyl-2-[(1-methyl-2-phenyl-1H-indol-3-yl)azo]-thiazolium-monomethylsulfat, 5-Brom-3-methyl-2-[(1-methyl-2-phenyl-1H-indol-3-yl)azo]-thiazolium-chlorid, 5-Brom-3-methyl-2-[(1-methyl-2-phenyl-1H-indol-3-yl)azo]-thiazolium-bromid, 5-Brom-3-methyl-2-[(1-methyl-2-phenyl-1H-indol-3-yl)azo]-thiazolium-monomethylsulfat, 5-Methoxy-3-methyl-2-[(1-methyl-2-phenyl-1H-indol-3-yl)azo]-thiazolium-chlorid, 5-Methoxy-3-methyl-2-[(1-methyl-2-phenyl-1H-indol-3-yl)azo]-thiazolium-bromid, 5-Methoxy-3-methyl-2-[(1-methyl-2-phenyl-1H-indol-3-yl)azo]-thiazolium-monomethylsulfat, 3-Methyl-2-[(1,2-dimethyl-1 H-indol-3-yl)azo]-thiazolium-chlorid, 3-Methyl-2-[(1 ,2-dimethyl-1 H-indol-3-yl)azo]-thiazolium-bromid, 3-Methyl-2-[(1,2-dimethyl-1H-indol-3-yl)azo]-thiazolium-monomethylsulfat, 3,4-Dimethyl-2-[(1,2-dimethyl-1H-indol-3-yl)azo]-thiazolium-chlorid, 3,4-Dimethyl-2-[(1,2-dimethyl-1H-indol-3-yl)azo]-thiazolium-bromid, 3,4-Dimethyl-2-[(1,2-dimethyl-1H-indol-3-yl)azo]-thiazolium-monomethylsulfat, 3,5-Dimethyl-2-[(1,2-dimethyl-1 H-indol-3-yl)azo]-thiazolium-chlorid, 3,5-Dimethyl-2-[(1,2-dimethyl-1H-indol-3-yl)azo]-thiazolium-bromid, 3,5-Dimethyl-2-[(1,2-dimethyl-1 H-indol-3-yl)azo]-thiazolium-monomethylsulfat, 3,4,5-Trimethyl-2-[(1,2-dimethyl-1H-indol-3-yl)azo]-thiazolium-chlorid, 3, 4,5-Trimethyl-2-[(1,2-dimethyl-1H-indol-3-yl)azo]-thiazolium-bromid, 3, 4,5-Trimethyl-2-[(1,2-dimethyl-1 H-indol-3-yl)azo]-thiazolium-monomethylsulfat, 5-Brom-3-methyl-2-[(1,2-dimethyl-1H-indol-3-yl)azo]-thiazolium-chlorid, 5-Brom-3-methyl-2-[(1,2-dimethyl-1 H-indol-3-yl)azo]-thiazolium-bromid, 5-Brom-3-methyl-2-[(1,2-dimethyl-1H-indol-3-yl)azo]-thiazolium-monomethylsulfat, 5-Methoxy-3-methyl-2-[(1,2-dimethyl-1H-indol-3-yl)azo]-thiazolium-chlorid, 5-Methoxy-3-methyl-2-[(1,2-dimethyl-1 H-indol-3-yl)azo]-thiazolium-bromid, 5-Methoxy-3-methyl-2-[(1,2-dimethyl-1H-indol-3-yl)azo]-thiazolium-monomethylsulfat, 3-Methyl-2-[(1,2-dimethyl-1H-indol-3-yl)azo]-5-nitro-thiazolium-chlorid, 3-Methyl-2-[(1,2-dimethyl-1H-indol-3-yl)azo]-5-nitro-thiazolium-bromid, 3-Methyl-2-[(1,2-dimethyl-1H-indol-3-yl)azo]-5-nitro-thiazolium-monomethylsulfat, 3-Methyl-2-[(1,2-diphenyl-1H-indol-3-yl)azo]-thiazolium-chlorid, 3-Methyl-2-[(1,2-diphenyl-1 H-indol-3-yl)azo]-thiazolium-bromid, 3-Methyl-2-[(1,2-diphenyl-1H-indol-3-yl)azo]-thiazolium-monomethylsulfat, 3,4-Dimethyl-2-[(1,2-diphenyl-1H-indol-3-yl)azo]-thiazolium-chlorid, 3,4-Dimethyl-2-[(1,2-diphenyl-1 H-indol-3-yl)azo]-thiazolium-bromid, 3,4-Dimethyl-2-[(1,2-diphenyl-1H-indol-3-yl)azo]-thiazolium-monomethylsulfat, 3,5-Dimethyl-2-[(1,2-diphenyl-1H-indol-3-yl)azo]-thiazolium-chlorid, 3,5-Dimethyl-2-[(1,2-diphenyl-1H-indol-3-yl)azo]-thiazolium-bromid, 3,5-Dimethyl-2-[(1,2-diphenyl-1 H-indol-3-yl)azo]-thiazolium-monomethylsulfat, 3,4,5-Trimethyl-2-[(1,2-diphenyl-1 H-indol-3-yl)azo]-thiazolium-chlorid, 3,4,5-Trimethyl-2-[(1,2-diphenyl-1 H-indol-3-yl)azo]-thiazolium-bromid, 3,4,5-Trimethyl-2-[(1,2-diphenyl-1H-indol-3-yl)azo]-thiazolium-monomethylsulfat, 5-Brom-3-methyl-2-[(1,2-diphenyl-1 H-indol-3-yl)azo]-thiazolium-chlorid, 5-Brom-3-methyl-2-[(1,2-diphenyl-1 H-indol-3-yl)azo]-thiazolium-bromid, 5-Brom-3-methyl-2-[(1,2-diphenyl-1 H-indol-3-yl)azo]-thiazolium-monomethylsulfat, 5-Methoxy-3-methyl-2-[(1,2-diphenyl-1 H-indol-3-yl)azo]-thiazolium-chlorid, 5-Methoxy-3-methyl-2-[(1,2-diphenyl-1 H-indol-3-yl)azo]-thiazolium-bromid und 5-Methoxy-3-methyl-2-[(1,2-diphenyl-1H-indol-3-yl)azo]-thiazolium-monomethylsulfat.

6. Mittel nach einem der Ansprüche 1 bis 5, **dadurch gekennzeichnet, dass** die Verbindung der Formel (I) in einer Menge von 0,01 bis 10 Gewichtsprozent enthalten ist.

7. Mittel nach einem der Ansprüche 1 bis 6, **dadurch gekennzeichnet, dass** es zusätzlich mindestens einen weiteren oxidationsstabilen direktziehenden Farbstoff und/oder oxidative Farbstoffvostufe enthält.

8. Mittel nach Anspruch 1 bis 7, **dadurch gekennzeichnet, dass** das gebrauchsfertige Färbemittel einen pH-Wert von 8 bis 11 aufweist.

9. Mittel nach einem der Ansprüche 1 bis 8, **dadurch gekennzeichnet, dass** das Oxidationsmittel ausgewählt ist aus Wasserstoffperoxid oder dessen Additionsverbindungen an Harnstoff, Melamin, Natriumborat oder Natriumcarbonat.

10. Mittel nach einem der Ansprüche 1 bis 9, **dadurch gekennzeichnet, dass** es in Form eines 2-Komponenten-Mittels, bestehend aus einer mindestens einen Indolylthiazoliumazofarbstoff der Formel (I) enthaltenden Farbträgermasse (A) und einer ein Oxidationsmittel enthaltenden Komponente (B), vorliegt.

11. Mittel nach einem der Ansprüche 1 bis 10, **dadurch gekennzeichnet, dass** es ein Haarfärbemittel ist.

## Claims

1. Agent for the simultaneous lightening and colouring of keratin fibres, **characterized in that** it comprises (a) an oxidizing agent and (b) at least one indolylthiazolium azo dye of the formula (I), and (c) has a basic pH, 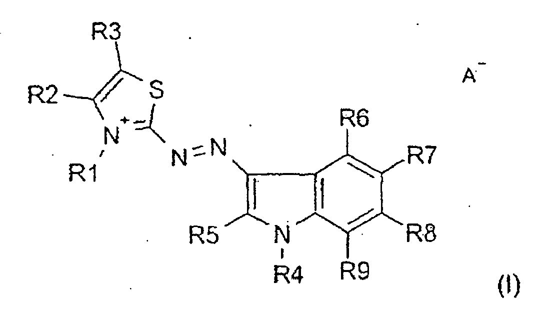 where
**R1** is a saturated or unsaturated (C₁-C₁₂)-alkyl group, a halogen-substituted (C₁-C₁₂)-alkyl group, a hydroxyl-(C₁-C₁₂) -alkyl group, a (C₁-C₆) -alkoxy- (C₁-C₁₂) -alkyl group, an amino- (C₁-C₁₂) -alkyl group, a (C₁-C₆)-alkylamino- (C₁-C₁₂) -alkyl group, a di (C₁-C₆) -alkylamino-(C₁-C₁₂)-alkyl group, a cyano-(C₁-C₁₂)-alkyl group, a substituted or unsubstituted phenyl group or a substituted or unsubstituted benzyl group,
**R2** and **R3** may be identical or different and, independently of one another, are hydrogen, a halogen atom, a saturated or unsaturated (C₁-C₁₂)-alkyl group, a (C₁-C₁₂)-alkoxy group, a nitro group, an amino group, a (C₁-C₁₂)-alkylamino group, a di(C₁-C₁₂)-alkylamino group, a (C₁-C₁₂)-hydroxyalkylamino group, a di(C₁-C₁₂)-hydroxyalkylamino group, a substituted or unsubstituted phenyl group or a substituted or unsubstituted heteroaryl group;
**R4** is a saturated or unsaturated (C₁-C₁₂)-alkyl group, a halogen-substituted (C₁-C₁₂)-alkyl group, a hydroxyl-(C₁-C₁₂)-alkyl group, a (C₁-C₆) -alkoxy- (C₁-C₁₂) -alkyl group, an amino- (C₁-C₁₂)-alkyl group, a (C₁-C₆) - alkylamino- (C₁-C₁₂) -alkyl group, a di (C₁-C₆) -alkylamino-(C₁-C₁₂)-alkyl group, a cyano-(C₁-C₁₂)-alkyl group, a substituted or unsubstituted phenyl group, a substituted or unsubstituted benzyl group or a substituted or unsubstituted heteroaryl group;
**R5** is hydrogen, a saturated (C₁-C₁₂)-alkyl group, a substituted or unsubstituted phenyl group or a C(O)O-(C₁-C₁₂)-alkyl group;
**R6, R7, R8** and **R9** may be identical or different and, independently of one another, are hydrogen, a halogen atom, a saturated or unsaturated (C₁-C₁₂)-alkyl group, a hydroxy group, a (C₁-C₁₂)-alkoxy group, a nitro group, an amino group, a (C₁-C₁₂)-alkylamino group or a di(C₁-C₁₂)-alkylamino group; and
**A⁻** is an anion of an organic or inorganic acid.

2. Agent according to Claim 1, **characterized in that R1** is a saturated or unsaturated (C₁-C₁₂)-alkyl group and **R4** is a saturated or unsaturated (C₁-C₁₂)-alkyl group or a substituted or unsubstituted phenyl group.

3. Agent according to Claim 2, **characterized in that R1** is a saturated (C₁-C₁₂)-alkyl group and **R4** is a saturated (C₁-C₁₂)-alkyl group or a phenyl group.

4. Agent according to one of Claims 1 to 3, **characterized in that A⁻** is a chloride, bromide, iodide, hydrogensulphate, sulphate, toluenesulphonate, benzene-sulphonate, monomethylsulphate, hexafluorophosphate, hexafluoroantimonate, tetrafluoroborate, tetraphenylborate, formate, acetate or propionate anion.

5. Agent according to one of Claims 1 to 4, **characterized in that** the compound of the formula (I) is chosen from 3-methyl-2-[(1-methyl-2-phenyl-1H-indol-3-yl)azo]thiazolium chloride, 3-methyl-2-[(1-methyl-2-phenyl-1H-indol-3-yl)azo]thiazolium bromide, 3-methyl-2-[(1-methyl-2-phenyl-1H-indol-3-yl)azo]thiazolium monomethylsulphate, 3,4-dimethyl-2-[(1-methyl-2-phenyl-1H-indol-3-yl)azo]thiazolium chloride, 3,4-dimethyl-2-[(1-methyl-2-phenyl-1H-indol-3-yl)azo]thiazolium bromide, 3,4-dimethyl-2-[(1-methyl-2-phenyl-1H-indol-3-yl)azo]thiazolium monomethylsulphate, 3,5-dimethyl-2-[(1-methyl-2-phenyl-1H-indol-3-yl)azo]thiazolium chloride, 3,5-dimethyl-2-[(1-methyl-2-phenyl-1H-indol-3-yl)azo]thiazolium bromide, 3,5-dimethyl-2-[(1-methyl-2-phenyl-1H-indol-3-yl)azo]thiazolium monomethylsulphate, 3,4,5-trimethyl-2-[(1-methyl-2-phenyl-1H-indol-3-yl)azo]thiazolium chloride, 3,4,5-trimethyl-2-[(1-methyl-2-phenyl-1H-indol-3-yl)azo]thiazolium bromide, 3,4,5-trimethyl-2-[(1-methyl-2-phenyl-1H-indol-3-yl)azo]thiazolium monomethylsulphate, 5-bromo-3-methyl-2-[(1-methyl-2-phenyl-1H-indol-3-yl)azo]thiazolium chloride, 5-bromo-3-methyl-2-[(1-methyl-2-phenyl-1H-indol-3-yl)azo]thiazolium bromide, 5-bromo-3-methyl-2-[(1-methyl-2-phenyl-1H-indol-3-yl)azo]thiazolium monomethylsulphate, 5-methoxy-3-methyl-2-[(1-methyl-2-phenyl-1H-indol-3-yl)azo]thiazolium chloride, 5-methoxy-3-methyl-2-[(1-methyl-2-phenyl-1H-indol-3-yl)azo]thiazolium bromide, 5-methoxy-3-methyl-2-[(1-methyl-2-phenyl-1H-indol-3-yl)azo]thiazolium monomethylsulphate, 3-methyl-2-[(1,2-dimethyl-1H-indol-3-yl)azo]thiazolium chloride, 3-methyl-2-[(1,2-dimethyl-1H-indol-3-yl)azo]thiazolium bromide, 3-methyl-2-[(1,2-dimethyl-1H-indol-3-yl)azo]thiazolium monomethylsulphate, 3,4-dimethyl-2-[(1,2-dimethyl-1H-indol-3-yl)azo]thiazolium chloride, 3,4-dimethyl-2-[(1,2-dimethyl-1H-indol-3-yl)azo]thiazolium bromide, 3,4-dimethyl-2-[(1,2-dimethyl-1H-indol-3-yl)azo]thiazolium monomethylsulphate, 3,5-dimethyl-2-[(1,2-dimethyl-1H-indol-3-yl)azo]thiazolium chloride, 3,5-dimethyl-2-[(1,2-dimethyl-1H-indol-3-yl)azo]thiazolium bromide, 3,5-dimethyl-2-[(1,2-dimethyl-1H-indol-3-yl)azo]thiazolium monomethylsulphate, 3,4,5-trimethyl-2-[(1,2-dimethyl-1H-indol-3-yl)azo]thiazolium chloride, 3,4,5-trimethyl-2-[(1,2-dimethyl-1H-indol-3-yl)azo]thiazolium bromide, 3,4,5-trimethyl-2-[(1,2-dimethyl-1H-indol-3-yl)azo]thiazolium monomethylsulphate, 5-bromo-3-methyl-2-[(1,2-dimethyl-1H-indol-3-yl)azo]thiazolium chloride, 5-bromo-3-methyl-2-[(1,2-dimethyl-1H-indol-3-yl)azo]-thiazolium bromide, 5-bromo-3-methyl-2-[(1,2-dimethyl-1H-indol-3-yl)azo]thiazolium monomethylsulphate, 5-methoxy-3-methyl-2-[(1,2-dimethyl-1H-indol-3-yl)azo]-thiazolium chloride, 5-methoxy-3-methyl-2-[(1,2-dimethyl-1H-indol-3-yl)azo]thiazolium bromide, 5-methoxy-3-methyl-2-[(1,2-dimethyl-1H-indol-3-yl)azo]-thiazolium monomethylsulphate, 3-methyl-2-[(1,2-dimethyl-1H-indol-3-yl)azo]-5-nitrothiazolium chloride, 3-methyl-2-[(1,2-dimethyl-1H-indol-3-yl)azo]-5-nitro-thiazolium bromide, 3-methyl-2-[(1,2-dimethyl-1H-indol-3-yl)azo]-5-nitrothiazolium monomethylsulphate, 3-methyl-2-[(1,2-diphenyl-1H-indol-3-yl)azo]thiazolium chloride, 3-methyl-2-[(1,2-diphenyl-1H-indol-3-yl)azo]-thiazolium bromide, 3-methyl-2-[(1,2-diphenyl-1H-indol-3-yl)azo]thiazolium monomethylsulphate, 3,4-dimethyl-2-[(1,2-diphenyl-1H-indol-3-yl)azo]thiazolium chloride, 3,4-dimethyl-2-[(1,2-diphenyl-1H-indol-3-yl)azo]thiazolium bromide, 3,4-dimethyl-2-[(1,2-diphenyl-1H-indol-3-yl)azo]thiazolium monomethylsulphate, 3,5-dimethyl-2-[(1,2-diphenyl-1H-indol-3-yl)azo]thiazolium chloride, 3,5-dimethyl-2-[(1,2-diphenyl-1H-indol-3-yl)azo]thiazolium bromide, 3,5-dimethyl-2-[(1,2-diphenyl-1H-indol-3-yl)azo]thiazolium monomethylsulphate, 3,4,5-trimethyl-2-[(1,2-diphenyl-1H-indol-3-yl)azo]thiazolium chloride, 3,4,5-trimethyl-2-[(1,2-diphenyl-1H-indol-3-yl)azo]thiazolium bromide, 3,4,5-trimethyl-2-[(1,2-diphenyl-1H-indol-3-yl)azo]thiazolium monomethylsulphate, 5-bromo-3-methyl-2-[(1,2-diphenyl-1H-indol-3-yl) azo] thiazolium chloride, 5-bromo-3-methyl-2-[(1,2-diphenyl-1H-indol-3-yl)azo]thiazolium bromide, 5-bromo-3-methyl-2-[(1,2-diphenyl-1H-indol-3-yl)azo]thiazolium monomethylsulphate, 5-methoxy-3-methyl-2-[(1,2-diphenyl-1H-indol-3-yl)azo]thiazolium chloride, 5-methoxy-3-methyl-2-[(1,2-diphenyl-1H-indol-3-yl)azo]-thiazolium bromide and 5-methoxy-3-methyl-2-[(1,2-diphenyl-1H-indol-3-yl)azo]thiazolium monomethylsulphate.

6. Agent according to one of Claims 1 to 5, **characterized in that** the compound of the formula (I) is present in an amount of from 0.01 to 10 per cent by weight.

7. Agent according to one of Claims 1 to 6, **characterized in that** it additionally comprises at least one further oxidation-stable direct dye and/or oxidative dye precursor.

8. Agent according to Claim 1 to 7, **characterized in that** the ready-to-use colorant has a pH of from 8 to 11.

9. Agent according to one of Claims 1 to 8, **characterized in that** the oxidizing agent is chosen from hydrogen peroxide or its addition compounds onto urea, melamine, sodium borate or sodium carbonate.

10. Agent according to one of Claims 1 to 9, **characterized in that** it is in the form of a 2-component agent, consisting of a colour carrier mass (A) comprising at least one indolylthiazolium azo dye of the formula (I), and a component (B) comprising an oxidizing agent.

11. Agent according to one of Claims 1 to 10, **characterized in that** it is a hair colorant.

## Revendications

1. Composition destinée à éclaircir et colorer simultanément les fibres de kératine, **caractérisée en ce que** (a) elle contient un oxydant ainsi que (b) au moins un colorant azoïque indolylthiazolium de formule (I), et (c) présente un pH basique 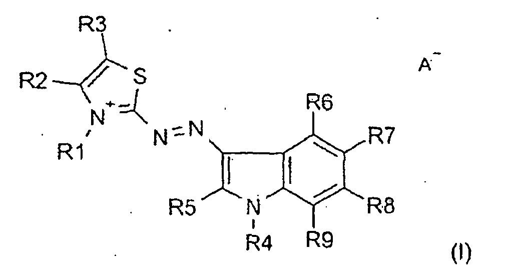 formule dans laquelle
**R1** représente un groupe alkyle en C₁-C₁₂ saturé ou insaturé, un groupe alkyle en C₁-C₁₂ substitué par un atome d'halogène, un groupe hydroxyalkyle en C₁-C₁₂, un groupe alcoxy (C₁-C₆)-alkyle (C₁-C₁₂), un groupe aminoalkyle en C₁-C₁₂, un groupe alkyl(C₁-C₆)aminoalkyle (C₁-C₁₂), un groupe dialkyl(C₁-C₆)aminoalkyle (C₁-C₁₂), un groupe cyanoalkyle(C₁-C₁₂), un groupe phényle substitué ou non substitué ou un groupe benzyle substitué ou non substitué ;
**R2** et **R3** peuvent être identiques ou différents et représentent, indépendamment l'un de l'autre, un atome d'hydrogène, un atome d'halogène, un groupe alkyle en C₁-C₁₂ saturé ou insaturé, un groupe alcoxy en C₁-C₁₂, un groupe nitro, un groupe amino, un groupe alkyl(C₁-C₁₂)amino, un groupe dialkyl(C₁-C₁₂)amino, un groupe hydroxyalkyl(C₁-C₁₂) amino, un groupe dihydroxyalkyl(C₁-C₁₂)amino, un groupe phényle substitué ou non substitué ou un groupe hétéroaryle substitué ou non substitué ;
**R4** représente un groupe alkyle en C₁-C₁₂ saturé ou insaturé, un groupe alkyle en C₁-C₁₂ substitué par un atome d'halogène, un groupe hydroxyalkyle en C₁-C₁₂, un groupe alcoxy(C₁-C₆) -alkyle (C₁-C₁₂), un groupe aminoalkyle en C₁-C₁₂, un groupe alkyl(C₁-C₆)aminoalkyle (C₁-C₁₂), un groupe dialkyl(C₁-C₆)aminoalkyle(C₁-C₁₂), un groupe cyanoalkyle(C₁-C₁₂), un groupe phényle substitué ou non substitué, un groupe benzyle substitué ou non substitué ou un groupe hétéroaryle substitué ou non substitué ;
**R5** représente un atome d'hydrogène, un groupe alkyle en C₁-C₁₂ saturé, un groupe phényle substitué ou non substitué ou un groupe C(O)O-alkyle(C₁-C₁₂) ;
**R6, R7, R8** et **R9** peuvent être identiques ou différents et représentent, indépendamment les uns des autres, un atome d'hydrogène, un atome d'halogène, un groupe alkyle en C₁-C₁₂ saturé ou insaturé, un groupe hydroxy, un groupe alcoxy en C₁-C₁₂, un groupe nitro, un groupe amino, un groupe alkyl (C₁-C₁₂) amino ou un groupe dialkyl(C₁-C₁₂)amino; et
**A⁻** est un anion d'un acide organique ou minéral.

2. Composition selon la revendication 1, **caractérisée en ce que R1** est un groupe alkyle en C₁-C₁₂ saturé ou insaturé et **R4** est un groupe alkyle en C₁-C₁₂ saturé ou insaturé ou un groupe phényle substitué ou non substitué.

3. Composition selon la revendication 2, **caractérisée en ce que R1** est un groupe alkyle en C₁-C₁₂ saturé et **R4** est un groupe alkyle en C₁-C₁₂ saturé ou un groupe phényle.

4. Composition selon l'une quelconque des revendications 1 à 3, **caractérisée en ce que A⁻** est un anion chlorure, bromure, iodure, hydrogénosulfate, sulfate, toluènesulfonate, benzènesulfonate, monométhylsulfate, hexafluorophosphate, hexafluoroantimonate, tétrafluoroborate, tétraphénylborate, formiate, acétate ou propionate.

5. Composition selon l'une quelconque des revendications 1 à 4, **caractérisée en ce que** le composé de formule (I) est choisi parmi le chlorure de 3-méthyl-2-[(1-méthyl-2-phényl-1H-indol-3-yl)azo]-thiazolium, le bromure de 3-méthyl-2-[(1-méthyl-2-phényl-1H-indol-3-yl)azo]-thiazolium, le monométhylsulfate de 3-méthyl-2-[(1-méthyl-2-phényl-1H-indol-3-yl)azo]-thiazolium, le chlorure de 3,4-diméthyl-2-[(1-méthyl-2-phényl-1H-indol-3-yl)azo]-thiazolium, le bromure de 3,4-diméthyl-2-[(1-méthyl-2-phényl-1H-indol-3-yl)azo]-thiazolium, le monométhylsulfate de 3,4-diméthyl-2-[(1-méthyl-2-phényl-1H-indol-3-yl)azo]-thiazolium, le chlorure de 3,5-diméthyl-2-[(1-méthyl-2-phényl-1H-indol-3-yl)azo]-thiazolium, le bromure de 3,5-diméthyl-2-[(1-méthyl-2-phényl-1H-indol-3-yl)azo]-thiazolium, le monométhylsulfate de 3,5-diméthyl-2-[(1-méthyl-2-phényl-1H-indol-3-yl)azo]-thiazolium, le chlorure de 3,4,5-triméthyl-2-[(1-méthyl-2-phényl-1H-indol-3-yl)azo]-thiazolium, le bromure de 3,4,5-triméthyl-2-[(1-méthyl-2-phényl-1H-indol-3-yl)azo]-thiazolium, le monométhylsulfate de 3,4,5-triméthyl-2-[(1-méthyl-2-phényl-1H-indol-3-yl)azo]-thiazolium, le chlorure de 5-bromo-3-méthyl-2-[(1-méthyl-2-phényl-1H-indol-3-yl)azo]-thiazolium, le bromure de 5-bromo-3-méthyl-2-[(1-méthyl-2-phényl-1H-indol-3-yl)azo]-thiazolium, le monométhylsulfate de 5-bromo-3-méthyl-2-[(1-méthyl-2-phényl-1H-indol-3-yl)azo]-thiazolium, le chlorure de 5-méthoxy-3-méthyl-2-[(1-méthyl-2-phényl-1H-indol-3-yl)azo]-thiazolium, le bromure de 5-méthoxy-3-méthyl-2-[(1-méthyl-2-phényl-1H-indol-3-yl)azo]-thiazolium, le monométhylsulfate de 5-méthoxy-3-méthyl-2-[(1-méthyl-2-phényl-1H-indol-3-yl)azo]-thiazolium, le chlorure de 3-méthyl-2-[(1,2-diméthyl-1H-indol-3-yl)azo]-thiazolium, le bromure de 3-méthyl-2-[(1,2-diméthyl-1H-indol-3-yl)azo]-thiazolium, le monométhylsulfate de 3-méthyl-2-[(1,2-diméthyl-1H-indol-3-yl)azo]-thiazolium, le chlorure de 3,4-diméthyl-2-[(1,2-diméthyl-1H-indol-3-yl)azo]-thiazolium, le bromure de 3,4-diméthyl-2-[(1,2-diméthyl-1H-indol-3-yl)azo]-thiazolium, le monométhylsulfate de 3,4-diméthyl-2-[(1,2-diméthyl-1H-indol-3-yl)azo]-thiazolium, le chlorure de 3,5-diméthyl-2-[(1,2-diméthyl-1H-indol-3-yl)azo]-thiazolium, le bromure de 3,5-diméthyl-2-[(1,2-diméthyl-1H-indol-3-yl)azo]-thiazolium, le monométhylsulfate de 3,5-diméthyl-2-[(1,2-diméthyl-1H-indol-3-yl)azo]-thiazolium, le chlorure de 3,4,5-triméthyl-2-[(1,2-diméthyl-1H-indol-3-yl)azo]-thiazolium, le bromure de 3,4,5-triméthyl-2-[(1,2-diméthyl-1H-indol-3-yl)azo]-thiazolium, le monométhylsulfate de 3,4,5-triméthyl-2-[(1,2-diméthyl-1H-indol-3-yl)azo]-thiazolium, le chlorure de 5-bromo-3-méthyl-2-[(1,2-diméthyl-1H-indol-3-yl)azo]-thiazolium, le bromure de 5-bromo-3-méthyl-2-[(1,2-diméthyl-1H-indol-3-yl)azo]-thiazolium, le monométhylsulfate de 5-bromo-3-méthyl-2-[(1,2-diméthyl-1H-indol-3-yl)azo]-thiazolium, le chlorure de 5-méthoxy-3-méthyl-2-[(1,2-diméthyl-1H-indol-3-yl)azo]-thiazolium, le bromure de 5-méthoxy-3-méthyl-2-[(1,2-diméthyl-1H-indol-3-yl)azo]-thiazolium, le monométhylsulfate de 5-méthoxy-3-méthyl-2-[(1,2-diméthyl-1H-indol-3-yl)azo]-thiazolium, le chlorure de 3-méthyl-2-[(1,2-diméthyl-1H-indol-3-yl)azo]-5-nitrothiazoiium, le bromure de 3-méthyl-2-[(1,2-diméthyl-1H-indol-3-yl)azo]-5-nitro-thiazolium, le monométhylsulfate de 3-méthyl-2-[(1,2-diméthyl-1H-indol-3-yl)azo]-5-nitrothiazolium, le chlorure de 3-méthyl-2-[(1,2-diphényl-1H-indol-3-yl)azo]-thiazolium, le bromure de 3-méthyl-2-[(1,2-diphényl-1H-indol-3-yl)azo]-thiazolium, le monométhylsulfate de 3-méthyl-2-[(1,2-diphényl-1H-indol-3-yl)azo]thiazolium, le chlorure de 3,4-diméthyl-2-[(1,2-diphényl-1H-indol-3-yl)azo]-thiazolium, le bromure de 3,4-diméthyl-2-[(1,2-diphényl-1H-indol-3-yl)azo]-thiazolium, le monométhylsulfate de 3,4-diméthyl-2-[(1,2-diphényl-1H-indol-3-yl)azo]-thiazolium, le chlorure de 3,5-diméthyl-2-[(1,2-diphényl-1H-indol-3-yl)azo]-thiazolium, le bromure de 3,5-diméthyl-2-[(1,2-diphényl-1H-indol-3-yl)azo]-thiazolium, le monométhylsulfate de 3,5-diméthyl-2-[(1,2-diphényl-1H-indol-3-yl)azo]-thiazolium, le chlorure de 3,4,5-triméthyl-2-[(1,2-diphényl-1H-indol-3-yl)azo]-thiazolium, le bromure de 3,4,5-triméthyl-2-[(1,2-diphényl-1H-indol-3-yl)azo]-thiazolium, le monométhylsulfate de 3,4,5-triméthyl-2-[(1,2-diphényl-1H-indol-3-yl)azo]-thiazolium, le chlorure de 5-bromo-3-méthyl-2-[(1,2-diphényl-1H-indol-3-yl)azo]-thiazolium, le bromure de 5-bromo-3-méthyl-2-[(1,2-diphényl-1H-indol-3-yl)azo]-thiazolium, le monométhylsulfate de 5-bromo-3-méthyl-2-[(1,2-diphényl-1H-indol-3-yl)azo]-thiazolium, le chlorure de 5-méthoxy-3-méthyl-2-[(1,2-diphényl-1H-indol-3-yl)azo]-thiazolium, le bromure de 5-méthoxy-3-méthyl-2-[(1,2-diphényl-1H-indol-3-yl)azo]-thiazolium et le monométhylsulfate de 5-méthoxy-3-méthyl-2-[(1,2-diphényl-1H-indol-3-yl)azo]-thiazolium.

6. Composition selon l'une quelconque des revendications 1 à 5, **caractérisée en ce que** le composé de formule (I) est contenu en une quantité de 0,01 à 10 % en poids.

7. Composition selon l'une quelconque des revendications 1 à 6, **caractérisée en ce qu'**elle contient en outre au moins un autre colorant direct stable vis-à-vis de l'oxydation et/ou des précurseurs de colorants d'oxydation.

8. Composition selon l'une quelconque des revendications 1 à 7, **caractérisée en ce que** la composition de teinture prête à l'emploi présente un pH de 8 à 11.

9. Composition selon l'une quelconque des revendications 1 à 8, **caractérisée en ce que** l'oxydant est choisi parmi le peroxyde d'hydrogène ou ses composés d'addition par fixation sur l'urée, la mélamine, le borate de sodium ou le carbonate de sodium.

10. Composition selon l'une quelconque des revendications 1 à 9, **caractérisée en ce qu'**elle se trouve sous forme d'une composition à deux composants, constituée d'une matière colorante (A) contenant au moins un colorant azoïque indolylthiazolium de formule (I) et d'un composant (B) contenant un oxydant.

11. Composition selon l'une quelconque des revendications 1 à 10, **caractérisée en ce qu'**il s'agit d'une composition de teinture pour cheveux.
